Europäisches Patentamt

European Patent Office  (11) Publication number: **0 333 495**

Office européen des brevets  **A2**

(12) **EUROPEAN PATENT APPLICATION**

(21) Application number: **89302642.7**

(22) Date of filing: **17.03.89**

(51) Int. Cl.⁴: **G 01 S 13/82**

(30) Priority: **18.03.88 GB 8806455**
**30.03.88 GB 8807620**

(43) Date of publication of application:
**20.09.89 Bulletin 89/38**

(84) Designated Contracting States:
**AT BE CH DE ES FR GR IT LI LU NL SE**

(71) Applicant: **THE GENERAL ELECTRIC COMPANY, p.l.c.**
**1 Stanhope Gate**
**London W1A 1EH (GB)**

(72) Inventor: **Forster, Ian James**
**31 Great Cob Springfield**
**Chelmsford Essex CM1 5LA (GB)**

**Marriott, Patrick John**
**6 Rowse Close Brownsover**
**Rugby Warwickshire (GB)**

(74) Representative: **Waters, Jeffrey et al**
**GEC Patent Department (Chelmsford Office)**
**GEC-Marconi Research Centre West Hanningfield Road**
**Great Baddow Chelmsford Essex CM2 8HN (GB)**

(54) **Position determining equipment.**

㋙ The position of an object relative to a land vehicle or sea craft is measured using electromagnetic waves transmitted between the object and the land vehicle or sea craft. The object could be a worker on a construction site, and the method could be used to provide a warning when a worker was in a dangerous position relative to the land vehicle; electromagnetic waves of frequency less than 5MHz may be used, and signal strength or phase could be measured. A UHF frequency in the range 2MHz to 1GHZ could be used to transmit from the object to the vehicle or sea craft.

Fig. 1b

Fig. 1a

## Description

### Position Determining Equipment

This invention relates to equipment for and a method of giving a measure of the position of an object relative to a land vehicle or sea craft.

The invention provides a method of giving a measure of the position of an object relative to a land vehicle or a sea craft, which comprises using electromagnetic waves transmitted between the object and the land vehicle or the sea craft to give a measure of the relative position.

The invention also provides apparatus for giving a measure of the position of an object relative to a land vehicle or sea craft, which comprises means for generating electromagnetic waves to be transmitted between the object and the land vehicle or sea craft to give a measure of the relative position.

The invention enables significant improvements in safety concerning the manoeuvreing of land vehicles and sea craft to be achieved.

A transmitter-receiver may be provided on the object and a transmitter-receiver may be provided on the land vehicle or sea craft.

The method may be used to determine the position of the person relative to a land vehicle.

The position may be determined using electromagnetic waves of frequency less than 5MHz, for example, 200 to 400KHz, and the signal strength may be measured or the phase of the signal transmitted in one direction may be compared with that of a signal transmitted in the opposite direction. U.H.F. may be used to return information from the object to the land vehicle or sea craft. Alternatively, the position may be determined from electromagnetic waves of frequency 200 to 600MHz, and direction finding techniques may be used.

The invention will now be described by way of example with reference to the accompanying drawings. in which:

Figure 1a is a block diagram of a first form of transmitter-receiver to be attached to a vehicle;

Figure 1b is a block diagram of an associated form of transmitter-receiver to be attached to a person;

Figure 2 is a block diagram of a second form of transmitter-receiver to be attached to a vehicle; and

Figures 3 and 4 illustrate the principle of operation of the circuit of figure 2.

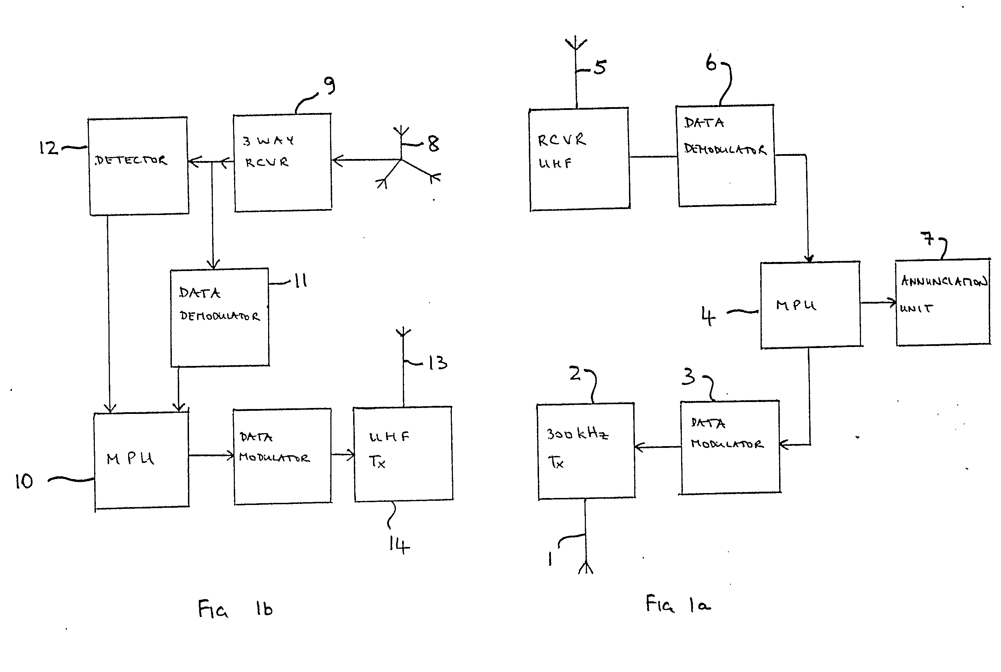

The apparatus of each of figures 1a and 1b and figures 2 to 4 give a measure of the position of a person relative to a vehicle using electromagnetic waves tranmsitted between the person and the vehicle. In each case, one transmitter-receiver is mounted on the vehicle and one transmitter-receiver is carried by a person, for example, on safety headgear such as a hard hat. The invention is particularly applicable to a constructional site such as a building site, quarrying site, road-making site, open-cast mining site etc. Conventionally there is poor visibility on such a site and it is hazardous for workers, particularly when vehicles are reversing. In accordance with the invention, the position of persons equipped with transmitter-receivers is sensed by means of electromagnetic waves and a warning is set off on the vehicle in the event of the vehicle moving too close to a person.

Referring to figure 1a, an antenna 1 is mounted centrally and uppermost on the rear of the vehicle. The antenna is a loop facing rearwardly and consists of three turns of heavy gauge insulated copper wire of diameter approximately 200mm. The antenna is connected to a transmitter 2 and operates at 300kHz, modulated by data from data modulator 3. The transmitter is controlled by a microprocessing unit 4. The unit also includes an antenna 5 for receiving signals from the transmitter-receiver of figure 1b, in the form of a vertically arranged dipole, the length of which is $\frac{1}{4}$ of the wavelength of the frequency of the transmitter of figure 1b, the frequency of the transmitter being a U.H.F. signal of 458.5MHz. The antenna 5 feeds a data demodulator 6 which in turn feeds the microprocessing unit (MPU) 4. An annunication unit 7 is fed by MPU 4.

Referring to figure 1b, the transmitter-receiver carried by each person has an omnidirectional antenna 8 for receiving 300kHz signals generated by the vehicle transmitter. The antenna 8 consists of three mutually orthogonal coils wound around a tube of side 25mm, each coil consisting of 5 turns. The coils are connected to a three-way receiver 9, and are connected to capacitors for tuning purposes to give a narrow band response. Filters select the desired 300kHz tone. A microprocessor unit (MPU) 10 controls the transmitter-receiver and receives input from a data demodulator 11 and a detector 12. Thi s unit transmits on UHF (on 458.5MHz) under the control of MPU 10 and data modulator 12 by means of a $\frac{1}{4}$ wavelength dipole 13 (around 16cm long) fed by a transmitter 14.

In operation of the units of figures 1a and 1b, the loop antenna 1 transmits a continuous (or, alternatively, an intermittent but regularly repeating) 300kHz tone, and the transmission strength is such that the field strength is in excess of 0.1 volt (for the tuned antenna 8) up to a distance of 5 metres directly behind the vehicle. The antenna 1 is so shaped that the field strength is also in excess of 0.1 volt over a roughly square region behind the vehicle, that is, to around 2.5 metres of each side of the vehicle back for 5 metres from the vehicle. This region represents the danger zone for workers.

The omnidirectional antenna receives the 300kHz tone and the detector 11 detects if the field strength is in excess of 0.1 volts. If so, the MPU 10 causes the unit to transmit a signal, modulating an appropriate signal onto the UHF 458.5MHz carrier, together with an identity of the particular transmitter-receiver in question. (The workers on the site will be provided with such transmitter-receivers, all with different identities). When the signal is received by the UHF antenna on the vehicle unit, an appropriate warning is set off by the annunciation unit, together with details of the particular transmitter- receiver which is in the danger area of the vehicle.

In order to sense regions to the front and to the sides of the vehicle, further vehicle transmitter-receiver units could be provided, and the data modulator 3 could modulate a 300kHz with a signal representing its identity. Such information would be relayed by the UHF transmitter of the worker and would in turn be indicated on the annunciation unit 7.

The system described simply gives an indication of whether or not a worker is in a danger area, but gives no indication of his position within that danger area. In order to give a more precise indication of position, the loop antenna 1 may be replaced by two crossed coils, the planes of the coils being orthogonal, fed at different frequencies, say at 300kHz and 315kHz. The personal transmitter-receiver would then require two tuned receiving antennae. Each loop would tend to transmit at right angles to the plane of its loop, and a knowledge of the relevant signal strength at the two frequencies, together with a knowledge of the fall-off in signal strength as the distance from the loops increases, enables the MPU 10 to calculate the position of the worker relative to the vehicle, and this information can be relayed and displayed by the anounciation unit 7.

As another alternative to determine the position of the worker within the danger zone, the two loops transmitting at 300kHz and 315kHz could be arranged on the rear of the vehicle, one on either side and each with its plane facing rearwardly. Again, a knowledge from the receiver on the worker of the relative strength of each signal, together with a knowledge of the fall-off in signal strength with range and bearing from each loop, enables the position of the worker to be identified.

As a further alternative, the 300kHz transmitting loop, or the crossed 300kHz/315kHz loops could be located on the worker's transmitter-receiver, and the omnidirectional receiving antenna could be positioned on the vehicle. The UHF signal could still be used to set the workers transmitter-receiver into action, for example, when the vehicle is reversing, but if desired the worker's transmitter-receiver could simply broadcast at regular intervals without being prompted.

As a further alternative, phase could be measured instead of field strength. Thus, in the case of the single loop at 300kHz on the vehicle, the personal transmitter-receiver on reception of the 300kHz tone could generate a phase-synchronous signal by multiplying the signal received by some appropriate factor. The UHF signal could be in the region of 458.5MHz. This UHF signal could be divided by the same factor of the vehicle, and its phase could then be compared with the transmitted signal from the vehicle. This would also serve to give the range measurement, which would be unambiguous provided that operations were confined to within one wavelength of the frequency. This is easy to achieve since one wavelength of 300kHz frequency is around 1000 metres, and is intended that the danger area for a vehicle would be considerably less than this.

It will be apparent that variations can be made to the above described embodiment without departing from the scope of the invention. Thus, the 300kHz frequeny could be any frequency less than 5MHz, preferably within the range of 200 to 400kHz. Equally the 458.5 MHz could be any frequency within the range 2MHz to 1GHZ, preferably 200 to 600MHz.

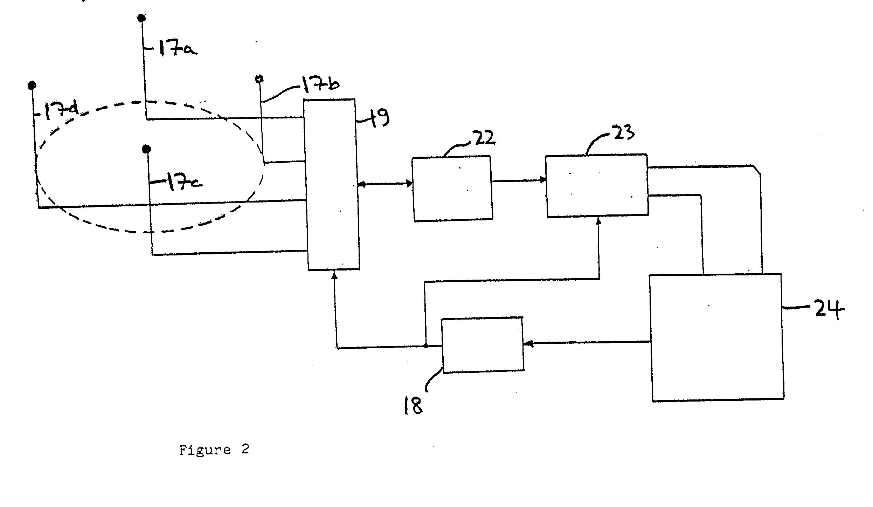

Referring to figures 2 to 4, the second form of transmitter-receiver uses direction finding techniques by measuring doppler shift from a pseudo-spinning antenna. The vehicle has omnidirectional transmitters, each transmitting at 458.5MHz at each corner. The personal transmitter-receivers transmit on the same frequency after predetermined interval from the reception of that frequency from the vehicle. Each of the two adjacent transmitter-receiver units on the vehicle calculate the bearing of the personal transmitter-receiver unit and, from that information together with a knowledge of a separation of the units and the vehicle, the position of the personal transmitter-receivers can be determined.

Referring to Figure 2, each vehicle transmitter-receiver (interrogator) of four vertically arranged dipole antennae 17a-d arranged at 90 degree intervals around the circumference of a circle, the length of the antenna being $\lambda/4 = 163mm$ and the diameter of the circle being less than $\lambda/2$. $\lambda = 652mm$ corresponding to the frequency of operation of 458.5 MzH.

An oscillator drive unit 18 of this frequency feeds each of the dipoles 17a-17d in turn via by a switch 19 so as to simulate a rotating $\lambda/4$ dipole. The four dipoles produce a four point approximation to a sine wave.

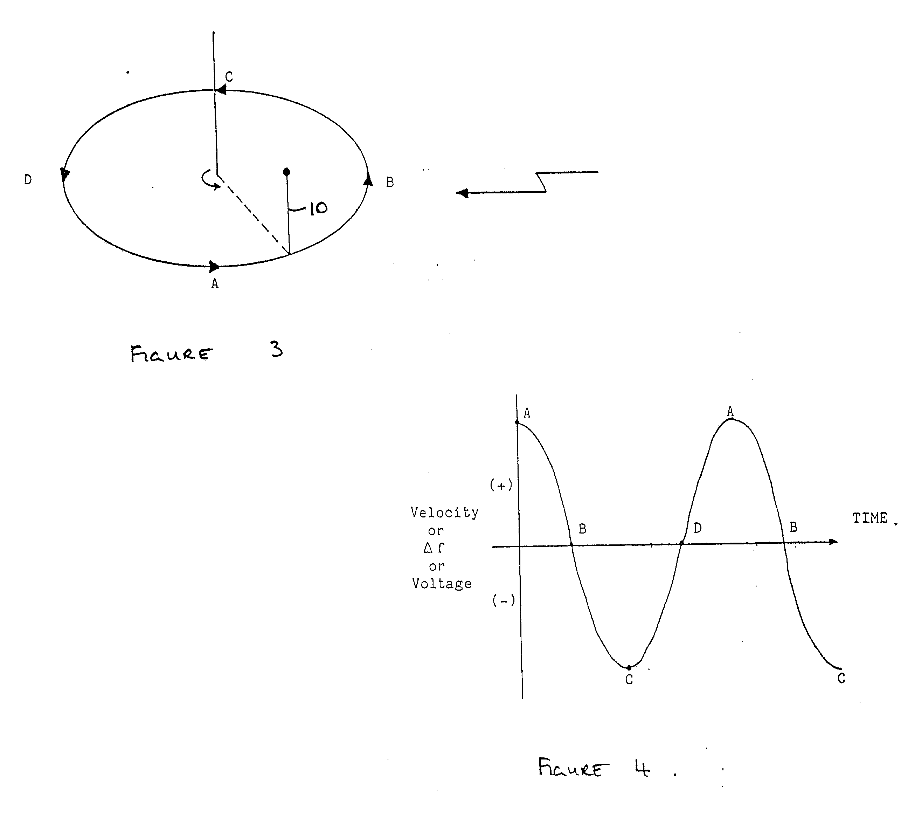

Referring to Figures 3 and 4, a rotating antenna 20 receiving a signal of a constant sinusoidal frequency senses an increased frequency at point A due to the Doppler effect, the transmitter frequency at point B, a reduced frequency at point C at the transmitter frequency again at point D. Figure 4 shows the variation of the Doppler shift $\Delta$ F with time.

On receipt of the signal transmitted by the interrogator, the personal transmitter-receiver (transponder) is activated and an oscillating signal of same frequency as that transmitted by the interrogator is radiated after a predetermined interval.

This is received by the electronically switched antennae 17a-d and demodulated in an FM receiver 22. Since the Doppler shift $\Delta$ f frequency modulates the transponder carrier wave, the demodulated wave takes exactly the same form as shown in Figure 4. The phase of this demodulated signal is compared in phase comparator 23, which also receives a reference signal from the drive unit 18 representing the phase of the scanning of the dipoles. In this way, logic and control unit 24 obtains a measure of the bearing of the transmitting transponder.

The on-board computer then calculates the position of the transponder from the bearings indicated by two of the interrogators and from the separation of those interrogators and, if appropriate, activates a warning. This applies when the truck becomes near to any transponder and in particular any person carrying a transponder.

Each interrogator may be provided with more than four dipoles, but this will not increase resolution, which depends on the accuracy of the phase difference measurement. Slight improvements in direction finding accuracy and additional immunity from interference can be achieved by allowing a smooth transition between two receiving antennae, at mid-point both feeding the receiver with 3dB loss, which can be achieved by modifying the drive wave forms.

Each interrogator may have a helical antenna instead of an array of dipoles.

As an alternative to the interrogators sensing the bearing of each transponder, the interrogators may instead sense the range of each transponder. This may be done by spread-spectrum techniques or by setting up standing waves and measuring the phase difference of those standing waves.

Equally a signal interrogator may be used which can sense range and bearing. In the case of both forms of transmitter-receiver, instead of using the transmitter-receiver to sense when a worker is in a danger area, the "object" could be a fixed position and a computer on the vehicle could use the positional information gained from the object to guide the vehicle relative to those objects. Equally, instead of having the transmitter-receivers on vehicles, they could be located on craft at sea. They could be used to determined the relative position of a ship and an oil platform, and the positional information could be used to control the position of the ship relative to the oil platform.

## Claims

1. A method of giving a measure of the position of an object relative to a land vehicle or a sea craft, which comprises using electromagnetic waves transmitted between the object and the land vehicle or the sea craft to give a measure of the relative position.

2. A method as claimed in claim 1, in which the object and the land vehicle or sea craft are each provided with a transmitter - receiver.

3. A method as claimed in claim 1 or claim 2, in which the method is used to give a measure of the position of a person relative to a land vehicle.

4. A method as claimed in claim 3, in which the method is used on a construction site.

5. A method as claimed in claim 4, in which a transmitter is incorporated in safety head-gear.

6. A method as claimed in claim 1 or claim 2, in which a measure of the position is given by the use of electromagnetic waves of frequency less than 5MHz.

7. A method as claimed in claim 6, in which the frequency of the electromagnetic waves lies in the range 200 to 400 kHz.

8. A method as claimed in claim 6 or claim 7, in which the signal strength of electromagnetic waves is measured.

9. A method as claimed in claim 8, in which the signal strength is arrange to be above a certain level over a predetermined spatial region.

10. A method as claimed in claims 6 or claim 7, in which the phase of an electromagnetic signal transmitted in one direction is compared with that of an electromagnetic signal transmitted in the opposite direction.

11. A method as claimed in any one of claims 6 to 10, in which the electromagnetic waves of less than 5MHz are transmitted from the land vehicle or sea craft to the object, and positional information calculated by a transmitter - receiver on the object is transmitted back to the land vehicle or sea craft at a higher frequency within the range of from 2MHz to 1GHz.

12. A method as claimed in claim 11, in which the frequency of the electromagnetic wave of higher frequency lies within the range of from 200 to 600MHz.

13. A method as claimed in any one of claims 1 to 5, in which the position is determined from electromagnetic waves having a frequency lying within the range 200 to 600MHz received by at least 4 antennae selected in turn by switch means, the signal being demodulated and compared with a signal representative of the scanning of the antenna.

14. A method of determining the position of an object relative to the land vehicle or sea craft, which comprises making one or more measurements each using an interrogator transmitter - receiver of electromagnetic waves fixed relative to the land vehicle or sea craft and a transponder transmitter - receiver fixed relative to the object, the or each measurement being indicative of range or bearing, in order to determine the position of the object relative to the land vehicle or sea craft.

15. A method of giving a measure of the position of an object relative to a land vehicle or sea craft substantially as herein described with reference to the accompanying drawings.

16. Apparatus for giving a measure of the position of an object relative to a land vehicle or sea craft, which comprises means for generating electromagnetic waves to be transmitted between the object and the land vehicle or sea craft to give a measure of the relative position.

17. Apparatus as claimed in claim 16, in which safety headgear incorporates a transmitter.

18. Apparatus as claimed in claim 17, including means for generating an electromagnetic wave at a frequency within the range of from 200 to 400KHz.

19. Apparatus as claimed in claim 18, incorporating signal strength measuring apparatus.

20. Apparatus for giving a measure of the position of an object relative to a land vehicle or sea craft substantially as herein described with reference to the accompanying drawings.

EP 0 333 495 A2

## Fig 1b

```
        ┌──────────┐      ┌──────────┐
   12 ──│ DETECTOR │◄─────│  3 WAY   │◄──── 8
        │          │      │  RCVR    │
        └────┬─────┘      └────┬─────┘   9
             │                 │
             │                 ▼
             │            ┌──────────┐
             │            │   DATA   │── 11
             │            │DEMODULATOR│
             │            └────┬─────┘
             │                 │
             ▼                 ▼
        ┌──────────┐   ┌──────────┐   ┌──────────┐  13
        │          │   │   DATA   │   │   UHF    │
        │   MPU    │──►│MODULATOR │──►│   Tx     │
        │          │   │          │   │          │
        └──────────┘   └──────────┘   └──────────┘
   10                                      14
```

Fig 1b

## Fig 1a

```
        ┌──────────┐      ┌──────────┐
    5 ──│  RCVR    │──────│   DATA   │── 6
        │  UHF     │      │DEMODULATOR│
        └──────────┘      └────┬─────┘
                               │
                               ▼
                          ┌──────────┐   ┌──────────────┐
                      4 ──│   MPU    │──►│ ANNUNCIATION │── 7
                          │          │   │    UNIT      │
                          └────┬─────┘   └──────────────┘
                               │
        ┌──────────┐   ┌──────────┐
    2 ──│ 300 kHz  │◄──│   DATA   │── 3
        │   Tx     │   │MODULATOR │
        └────┬─────┘   └──────────┘
             │
             1
```

Fig 1a

Figure 2

FIGURE 3

FIGURE 4.

TIME.

A       B       C

D

B       C

(+)

(-)

Velocity
or
Δf
or
Voltage